# EUROPEAN PATENT APPLICATION

(11) **EP 4 549 416 A1**
(43) Date of publication of application: **07.05.2025**
(21) Application number: 24196758.7
(22) Date of filing: 27.08.2024
(51) Int. Cl.: C04B 35/80, C04B 38/00

(54) **VARIABLE Z-CHANNEL HOLE PATTERN**

(30) Priority: 27.10.2023 US 202318496475
(71) Applicant: RTX Corporation, Farmington, CT 06032 (US)
(72) Inventor: READ, Kathryn S., Marlborough, 06447 (US); LAZUR, Andrew Joseph, La Jolla, 92037 (US)
(74) Representative: Dehns

(57) **Abstract**

A fibrous ceramic preform (10) includes a first surface (14), a second surface (16) opposite the first surface (14), at least a first thickness (T1) defined between the first surface (14) and the second surface (16), a first zone (18) having a first plurality of z-channels (12-1), and a second zone (20) having a second plurality of z-channels (12-2). The first plurality of z-channels (12-1) are different from the second plurality of z-channels (12-2).

## Description

### BACKGROUND

The present invention relates to the fabrication of ceramic matrix composites (CMCs) and, more particularly, to CMCs having improved properties for operating in gas turbine engines.

In the processing of CMCs, there is a need to infiltrate matrix within and around fibrous tow bundles to replace pore volume with dense matrix material. In a woven system, large voids often exist between adjacent tows of a preform. Such voids can become large defects after infiltration of the composite that are detrimental to composite properties. The pore network through a woven system is often highly tortuous for infiltrating reactant gases, which can lead to uneven deposition through the thickness of the preform. The formation of z-channels can create more direct pathways for reactant gases. Preforms can have inherent variations, e.g., due to geometrical configuration, thus, it is desirable to pattern z-channels consistent with preform variations to ensure a more uniform microstructure in the resulting CMC.

### SUMMARY

A fibrous ceramic preform includes a first surface, a second surface opposite the first surface, at least a first thickness defined between the first surface and the second surface, a first zone having a first plurality of z-channels, and a second zone having a second plurality of z-channels. The first plurality of z-channels are different from the second plurality of z-channels.

A method of forming a CMC component from a fibrous ceramic preform includes predetermining an arrangement of a first plurality of z-channels and a second plurality of z-channels in the preform, forming the first plurality of z-channels in a first zone of the preform, forming the second plurality of z-channels in a second zone of the preform, the second plurality of z-channels being different from the first plurality of z-channels, and densifying the preform with a ceramic matrix.

### BRIEF DESCRIPTION OF THE DRAWINGS

FIG. 1 is a simplified cross-sectional view of a fibrous ceramic preform with two types of differently sized z-channels.
FIG. 2 is a top view of the preform of FIG. 1.
FIG. 3 is a simplified cross-sectional view of the preform of FIG. 1 with two differently sized and spaced z-channels.
FIG. 4 is a simplified cross-sectional view of an alternative fibrous ceramic preform with two types of differently oriented z-channels.
FIG. 5 is a simplified cross-sectional view of another alternative fibrous ceramic preform with three types of z-channels varying in both size and orientation.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings.

### DETAILED DESCRIPTION

This disclosure presents fibrous ceramic preforms with varied z-channels for optimizing preform infiltration. In general, the preforms disclosed herein can be formed from tows of ceramic (e.g., silicon carbide) fibers arranged in one of various two or three-dimensional woven architectures such as plain, harness (e.g., 3, 5, 8, etc.), twill, or non-symmetric to name a few non-limiting examples. Non-woven architectures (e.g., chopped, felted, etc.) are also contemplated herein. Sheets, plies, tapes, braids, etc. of the ceramic fibers can be laid up to resemble the shape of the final CMC component. The preforms can, in some embodiments, be stabilized with a polymer binder prior to z-channel formation, which can be carried out using needles.

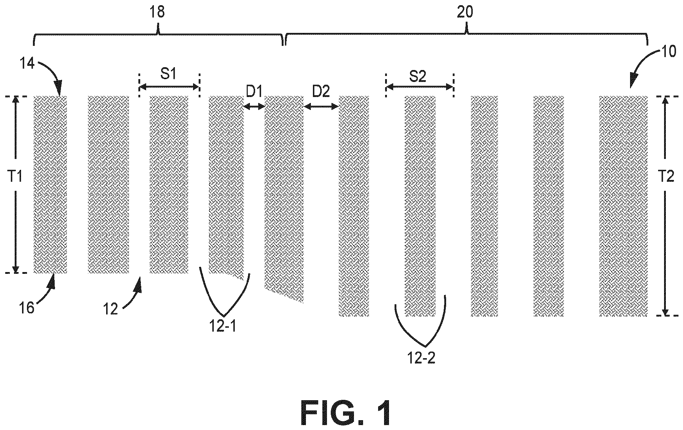

FIG. 1 is a simplified cross-sectional view of a portion of fibrous ceramic preform 10 perforated with z-channels 12. Preform 10 includes first surface 14 and second surface 16 with a thickness defined therebetween. In some embodiments, first surface 14 can be an outer surface, and second surface 16 an outer surface, or vice versa. Preform 10 has a variable thickness, transitioning from first thickness T1 to second thickness T2. As shown, T2 is greater than T1. As such, preform 10 can include at least two sets of z-channels 12, shown as z-channels 12-1 and 12-2. Z-channels 12-1 are grouped together in a first areal zone 18 of preform 10, and z-channels 12-2 are grouped together in a second areal zone 20, each zone 18 and 20 generally corresponding to first thickness T1 and second thickness T2, respectively. Each z-channel 12-1 can be generally cylindrical with a first uniform diameter D1, and each z-channel 12-2 can also be generally cylindrical with a second uniform diameter D2. Each z-channel 12-1 can be spaced apart from an adjacent z-channel 12-1 a first distance S1, measured between center points of the adjacent z-channels 12-1. Each z-channel 12-2 can also be spaced apart from an adjacent z-channel 12-2 a second distance S2, measured between center points of the adjacent z-channels 12-2.

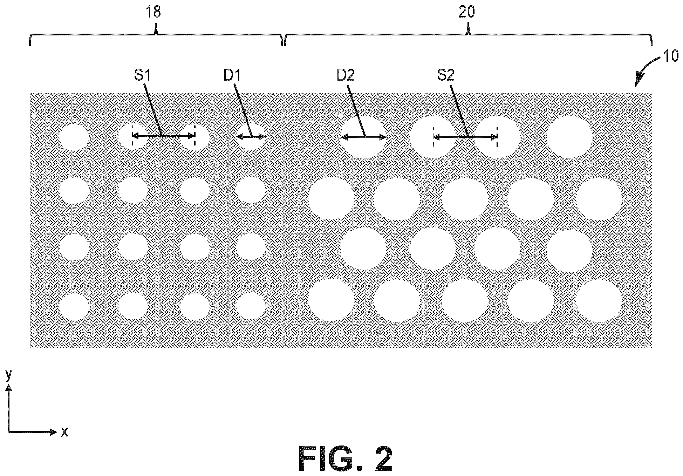

FIG. 2 is a top view of preform 10 of FIG. 1, showing first surface 14. As shown, z-channels 12-1 of first zone 18 are arranged in aligned rows (i.e., in the x-direction) and columns (i.e., in the y-direction) while z-channels 12-2 of second zone 20 are arranged in offset, or staggered rows and columns. In an alternative embodiment, z-channels 12-1 can be arranged in an offset manner, while z-channels 12-2 are arranged in an aligned manner. In yet another alternative embodiment, z-channels 12-1 and 12-2 can be uniformly arranged in an offset or aligned manner.

In order to account for the increased thickness T2 associated with second zone 20, z-channels 12-2 are larger than z-channels 12-1, and more specifically, have a larger diameter D2. Spacing S1 and S2 can be generally equal in this example. Vaporous precursors of, for example, the chemical vapor infiltration (CVI) process used to densify preform 10 with a ceramic (e.g., silicon carbide) matrix have a longer path length to a mid-thickness region of zone 20 than in zone 18 because of the difference in preform 10 thickness. The increased diameters D2 therefore allows the vaporous precursors access to internal (i.e., between surfaces 14 and 16) portions of preform 10 prior to canning off of z-channels 12-2 by matrix, which inhibits further internal access by vaporous precursors to preform 10. Stated another way, increased diameters D2 can offset the increased thickness T2 with respect to the length of time before canning off occurs.

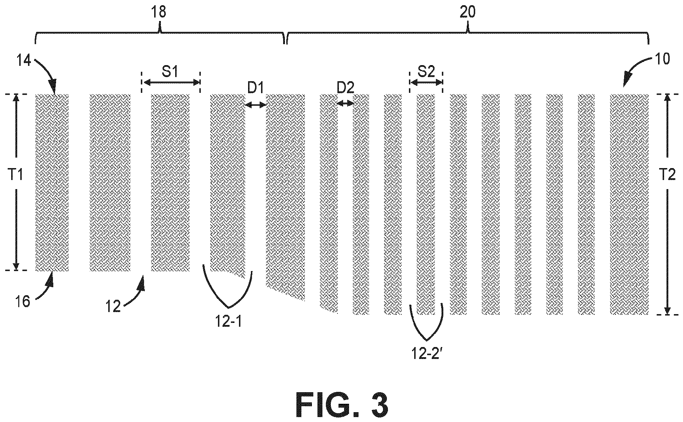

Instead of varying the diameter of z-channels 12 to account for changes in the thickness of preform 10, spacing can additionally and/or alternatively be varied to potentially allow for an increase in the number of z-channels 12 in the increased thickness region of preform 10. FIG. 3 illustrates such an example, with preform 10 having z-channels 12-2' in second zone 20 which are substantially similar to z-channels 12-2 of FIG. 1, except that D2 is less than D1, and S2 is less than S1. Z-channels 12-1 remain the same. As such, the difference between FIGS. 1 and 3 is that z-channels 12-2' outnumber z-channels 12-2, although the total area of z-channels 12-2 (i.e., open area) per unit area of either surface 14 or 16 can be generally equal in FIGS. 1 and 3. Z-channels 12-2' therefore provide more openings for vaporous precursors to access internal portions of preform 10 in region 20.

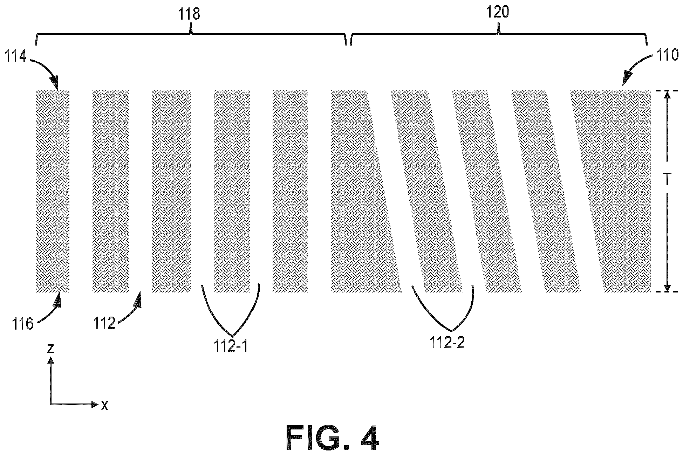

FIG. 4 is a simplified cross-sectional illustration of a portion of preform 110, perforated with z-channels 112. Preform 110 can include first surface 114 and second surface 116 with a uniform thickness T defined therebetween. Preform 110 can otherwise be substantially similar to preform 10, and in some cases, can even be a separate region of preform 10, albeit with a uniform thickness. Preform 110 can include at least two sets of z-channels 112, shown as z-channels 112-1 and 112-2. Z-channels 112-1 and 112-2 can be generally cylindrical with uniform diameters and/or spacing (not labeled in FIG. 4). Z-channels 112-1 are grouped together in first areal zone 118 of preform 110, and z-channels 112-2 are grouped together in second areal zone 120. Zones 118 and 120 can correspond to variable regions of preform 110 created by different weave architectures. For example, zone 118 can correspond to a portion of preform 110 formed with a woven fabric, and zone 120 can correspond to a portion of preform 110 formed with a braided fabric. Depending on the particular weave and braid patterns, pores (i.e., openings between individual tows) can be differently shaped (e.g., square versus triangular), or staggered or otherwise obstructed due to fabric layering. Accordingly, z-channels 112-1 can be disposed such that they are normal to first surface 14 and second surface 16 (i.e., disposed along the z-axis), while z-channels 112-2 can be angled with respect to first surface 14 and second surface 16.

As another example, angled z-channels 112-2 can account for differences in flow characteristics of vaporous precursors during CVI, where downstream portions of a preform may not be exposed to the same amount of vaporous precursors due to flow characteristics through the reactor. So, if zone 120 was downstream relative to the flow (i.e., along the x-axis), angling z-channels 112-2 may improve uptake relative to at least one surface (e.g., surface 114). Although shown as uniformly angled in the same direction, it should be mentioned that angled z-channels 112-2 can be differently angled (i.e., with respect to one another) in an alternative embodiment.

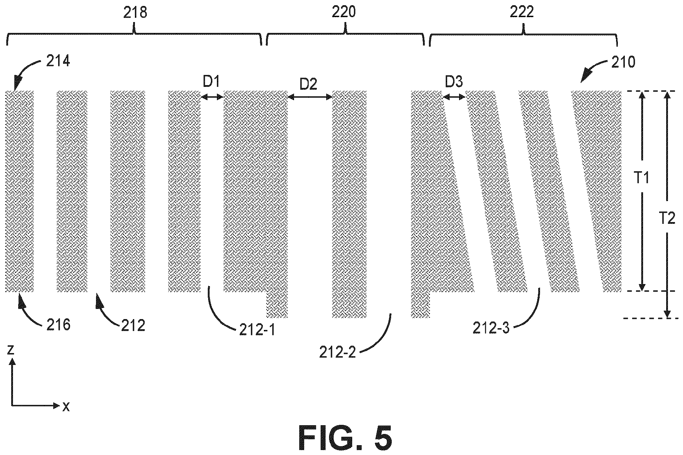

FIG. 5 is a simplified cross-sectional view of preform 210, which can be substantially similar to and combine characteristics of preforms 10 and 110. Preform 210 includes first surface 214 and second surface 216 with a thickness defined therebetween. More specifically, preform 210 has a variable thickness, with a first thickness T1 and a portion of increased second thickness T2. Preform 210 can further include multiple fabric architectures and/or require positioning within the CVI reactor such that not all preform portions will be equally accessible to vaporous precursors. Accordingly, preform 210 can include three sets of z-channels 212, shown as z-channels 212-1, 212-2, and 212-3 corresponding to first areal zone 218, second areal zone 220, and third areal zone 222, respectively. Second zone 220 corresponds to a region of increased thickness (i.e., T2) and can therefore have z-channels 212-2 with diameters D2 greater than diameter D1 of z-channels 212-2 and diameter D3 of z-channels 212-3. Third zone 222 can correspond to a region formed with a fiber architecture and/or reactor positioning benefiting from angled (i.e., with respect to the z-axis) z-channels 212-3. Spacing (not labeled in FIG. 5) and/or alignment of z-channels can also be varied.

It should be mentioned that any of preforms 10, 110, and 210 can include more than two or three zones corresponding to as many different types of z-channels as necessary to facilitate uniform infiltration and densification with a matrix. Any of the z-channel variations described herein can be variously combined to that end.

Suitable z-channel type and patterning in zones of preforms 10, 110, and/of 210 can be predetermined using data obtained from various experimental means. In a first example, model preform cross-sections can be formed and characterized by destructive and/or non-destructive means. In a second example, a 3D map of the porosity of a laid-up preform can be obtained through x-ray computed tomography (XCT) and supplemented with physics-based modeling to determine optimal z-channel placement and/or architecture and execute model-based CVI. In a third example, computer-generated preform microstructures including z-channels can be paired with physics-based modeling and validated through XCT. After formation of z-channels, a respective preform can be debulked, receive one or more interface coatings (e.g., of boron nitride) using CVI, then be densified with a ceramic matrix using CVI. Other densification methodologies, such as melt infiltration or polymer infiltration and pyrolysis can alternatively and/or additionally be used. The variation in z-channels in a given preform allows for more uniform matrix deposition despite preform variations and processing variations. CMC components fabricated from the disclosed preforms can be incorporated into aerospace, maritime, or industrial equipment, to name a few, non-limiting examples.

### Discussion of Possible Embodiments

The following are non-exclusive descriptions of possible embodiments of the present invention.

A fibrous ceramic preform includes a first surface, a second surface opposite the first surface, at least a first thickness defined between the first surface and the second surface, a first zone having a first plurality of z-channels, and a second zone having a second plurality of z-channels. The first plurality of z-channels are different from the second plurality of z-channels.

The preform of the preceding paragraph can optionally include any one or more of the following features, configurations and/or additional components:
In the above preform, each of the first plurality of z-channels can be spaced apart from an adjacent one of the first plurality of z-channels a first distance, and each of the second plurality of z-channels can be spaced apart from an adjacent one of the second plurality of z-channels a second distance.

In any of the above preforms, the second distance can be different from the first distance.

In any of the above preforms, the first zone can correspond to the first thickness, and the second zone can correspond to a second thickness.

In any of the above preforms, the second thickness can be greater than the first thickness.

In any of the above preforms, each of the first plurality of z-channels can have a first diameter, and each of the second plurality of z-channels can have a second diameter.

In any of the above preforms, the second diameter can be different from the first diameter.

In any of the above preforms, each of the first plurality of z-channels can be oriented normal to the first surface and the second surface.

In any of the above preforms, each of the second plurality of z-channels can be oriented at an angle with respect to the first surface and the second surface.

In any of the above preforms, a ceramic material corresponding to the first zone can have a first architecture, and the ceramic material corresponding to the second zone can have a second architecture different from the first architecture.

Any of the above preforms can further include a third zone having a third plurality of z-channels. The third plurality of z-channels can be different from the first plurality of z-channels and the second plurality of z-channels.

In any of the above preforms, the first zone can correspond to the first thickness, and the second zone can correspond to a second thickness.

In any of the above preforms, the second thickness can be greater than the first thickness.

In any of the above preforms, each of the first plurality of z-channels can have a first diameter, and each of the second plurality of z-channels can have a second diameter.

In any of the above preforms, the second diameter can be different from the first diameter.

In any of the above preforms, each of the first plurality of z-channels or the second plurality of z-channels can be oriented normal to the first surface and the second surface.

In any of the above preforms, each of the third plurality of z-channels can be oriented at an angle with respect to the first surface and the second surface.

A method of forming a CMC component from a fibrous ceramic preform includes predetermining an arrangement of a first plurality of z-channels and a second plurality of z-channels in the preform, forming the first plurality of z-channels in a first zone of the preform, forming the second plurality of z-channels in a second zone of the preform, the second plurality of z-channels being different from the first plurality of z-channels, and densifying the preform with a ceramic matrix.

The method of the preceding paragraph can optionally include any one or more of the following features, configurations and/or additional steps:
In the above method, the step pf predetermining the arrangement of the first plurality of z-channels and the second plurality of z-channels can be carried out using at least part of a physical preform, or a computer generated preform.

In any of the above preforms, the step of densifying the preform with the ceramic matrix can be carried out using at least one of chemical vapor infiltration, melt infiltration, and polymer infiltration and pyrolysis.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A fibrous ceramic preform (10; 110; 210) comprising:
a first surface (14; 114; 214);
a second surface (16; 116; 216) opposite the first surface (14; 114; 214);
at least a first thickness (T1) defined between the first surface (14; 114; 214) and the second surface (16; 116; 216);
a first zone (18; 118; 218) having a first plurality of z-channels (12-1; 112-1; 212-1); and
a second zone (20; 120; 220) having a second plurality of z-channels (12-2; 112-2; 212-2),
wherein the first plurality of z-channels (12-1; 112-1; 212-1) are different from the second plurality of z-channels (12-2; 112-2; 212-2).

2. The preform (10; 110; 210) of claim 1, wherein each of the first plurality of z-channels (12-1; 112-1; 212-1) is spaced apart from an adjacent one of the first plurality of z-channels (12-1; 112-1; 212-1) a first distance (S1), and wherein each of the second plurality of z-channels (12-2; 112-2; 212-2) is spaced apart from an adjacent one of the second plurality of z-channels (12-2; 112-2; 212-2) a second distance (S2).

3. The preform (10; 110; 210) of claim 2, wherein the second distance (S2) is different from the first distance (S1).

4. The preform (10; 110; 210) of claim 1, 2 or 3, wherein the first zone (18; 118; 218) corresponds to the first thickness (T1), and wherein the second zone (20; 120; 220) corresponds to a second thickness (T2).

5. The preform (10; 110; 210) of claim 4, wherein the second thickness (T2) is greater than the first thickness (T1).

6. The preform (10; 110; 210) of any preceding claim, wherein each of the first plurality of z-channels (12-1; 112-1; 212-1) has a first diameter (D1), and wherein each of the second plurality of z-channels (12-2; 112-2; 212-2) has a second diameter (D2).

7. The preform (10; 110; 210) of claim 6, wherein the second diameter (D2) is different from the first diameter (D1).

8. The preform (10; 110; 210) of any preceding claim, wherein each of the first plurality of z-channels (12-1; 112-1; 212-1) is oriented normal to the first surface (14; 114; 214) and the second surface (16; 116; 216).

9. The preform (10; 110; 210) of claim 8, wherein each of the second plurality of z-channels (12-2; 112-2; 212-2) is oriented at an angle with respect to the first surface (14; 114; 214) and the second surface (16; 116; 216).

10. The preform (10; 110; 210) of any preceding claim, wherein a ceramic material corresponding to the first zone (18; 118; 218) has a first architecture, and wherein the ceramic material corresponding to the second zone (20; 120; 220) has a second architecture different from the first architecture.

11. The preform (210) of any preceding claim, further comprising:
a third zone (222) having a third plurality of z-channels (212-3),
wherein the third plurality of z-channels (212-3) are different from the first plurality of z-channels (212-1) and the second plurality of z-channels (212-2).

12. The preform (210) of claim 11, wherein each of the third plurality of z-channels (212-3) is oriented at an angle with respect to the first surface (214) and the second surface (216).

13. A method of forming a CMC component from a fibrous ceramic preform (10; 110; 210), the method comprising:
predetermining an arrangement of a first plurality of z-channels (12-1; 112-1; 212-1) and a second plurality of z-channels (12-2; 112-2; 212-2) in the preform (10; 110; 210);
forming the first plurality of z-channels (12-1; 112-1; 212-1) in a first zone (18; 118 218) of the preform (10; 110; 210);
forming the second plurality of z-channels (12-2; 112-2; 212-2) in a second zone (20; 120; 220) of the preform (10; 110; 210), the second plurality of z-channels (12-2; 112-2; 212-2) being different from the first plurality of z-channels (12-1; 112-1; 212-1); and
densifying the preform (10; 110; 210) with a ceramic matrix.

14. The method of claim 13, wherein the step of predetermining the arrangement of the first plurality of z-channels (12-1; 112-1; 212-1) and the second plurality of z-channels (12-2; 112-2; 212-2) is carried out using at least part of a physical preform, or a computer generated preform.

15. The method of claim 13 or 14, wherein the step of densifying the preform (10; 110; 210) with the ceramic matrix is carried out using at least one of chemical vapor infiltration, melt infiltration, and polymer infiltration and pyrolysis.
